# DEMANDE DE BREVET EUROPEEN

(11) **EP 3 786 781 A1**
(43) Date de publication de la demande: **03.03.2021**
(21) Numéro de dépôt: 19194722.5
(22) Date de dépôt: 30.08.2019
(51) Int. Cl.: G06F 8/20, G06F 9/50, G06Q 10/06

(54) **SYSTEME D'AIDE A LA CONCEPTION D'APPLICATION D'INTELLIGENCE ARTIFICIELLE, EXECUTABLE SUR DES PLATEFORMES INFORMATIQUES DISTRIBUEES**

(71) Demandeur: BULL SAS, 78340 Les Clayes Sous Bois (FR)
(72) Inventeur: EXERTIER, François, 38410 Saint Martin D'Uriage (FR); GAVILLON, Mathis, 38420 Le Versoud (FR)
(74) Mandataire: Debay, Damien

(57) **Abrégé**

*La présente invention concerne un Système utilisant une suite d'outils d'aide à la conception d'application d'Intelligence Artificielle, (SOACAIA) modulaires et clairement structurés, exécutables sur des plateformes informatiques distribuées ou non pour parcourir développer, rendre disponible et gérer des applications d'IA* , *ce jeu d'outils implémentant trois fonctions :*
*- Une fonction Studio permettant d'établir un espace partagé sécurisé et privé pour l'entreprise ;*
*- Une fonction Forge permettant d'industrialiser les instances d'IA et de rendre les modèles analytiques et leur jeu de données associées disponibles aux équipes de développement;*
*- Une fonction Orchestration pour gérer la mise en œuvre totale des instances d'IA conçues par la fonction STUDIO et industrialisée par la fonction Forge et effectuer la gestion permanente sur une infrastructure hybride de nuage ou HPC.*

## Description

### DOMAINE TECHNIQUE ET OBJET DE L'INVENTION

*La présente invention se rapporte au domaine des applications d'intelligence artificielle (IA) sur des plates forme informatiques.*

### ETAT DE LA TECHNIQUE

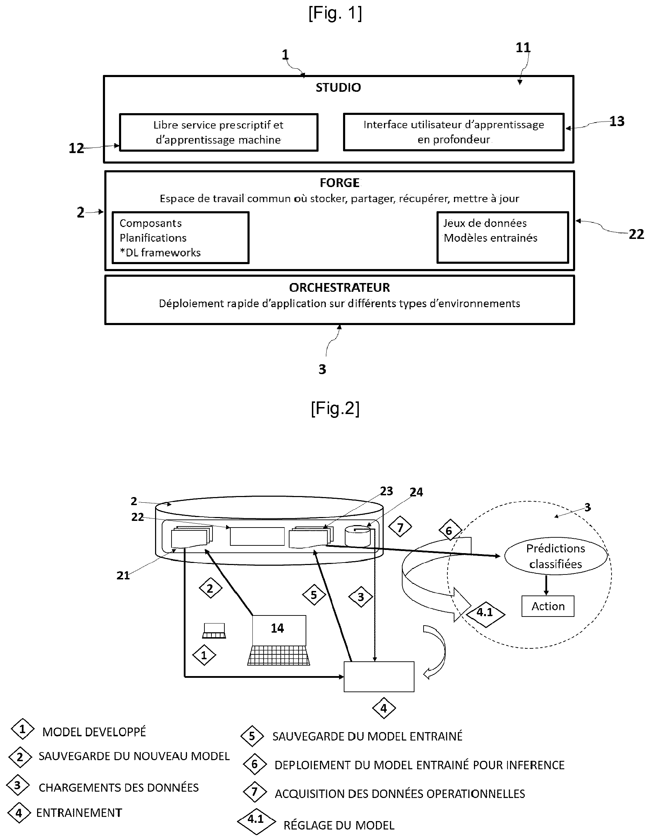

*Selon l'état de l'art, certain des utilisateurs d'une application d'intelligence artificielle réalisent les tâches (**figure 1**) de développement, de mise au point, et de déploiement de modèle.*

*Ceci présente des inconvénients notamment elles ne permettent pas à ces utilisateurs de se focaliser sur leur activité principale.*

*L'invention vise donc à résoudre ces inconvénients en proposant aux utilisateurs (le Data Scientist par exemple) un dispositif qui automatise une partie du processus traditionnel de développement de modèles machine learning (ML) ainsi que son procédé d'utilisation.*

### PRESENTATION GENERALE DE L'INVENTION

*La présente invention a donc pour objet de pallier à au moins l'un des inconvénients de l'art antérieur en proposant un dispositif et un procédé qui simplifient la création et l'utilisation d'applications d'intelligence artificielle.*

*Pour parvenir à ce résultat la présente invention concerne un système utilisant une suite d'outils d'aide à la conception d'application d'Intelligence Artificielle, (SOACAIA) modulaires et clairement structurés, exécutables sur des plateformes informatiques distribuées pour parcourir développer, rendre disponible et gérer des applications d'IA, ce jeu d'outils implémentant trois fonctions :*
- *Une fonction Studio permettant d'établir un espace partagé sécurisé et privé pour l'entreprise dans lequel l'équipe étendue des analystes commerciaux, des scientifiques de données, des architectes d'application et des gestionnaires IT peuvent communiquer et travailler ensembles en collaboration ;*
- *Une fonction Forge permettant d'industrialiser les instances d'IA et de rendre les modèles analytiques et leur jeu de données associées disponibles aux équipes de développement sous réserve du respect des conditions de sécurité et de conformité de traitement ;*
- *Une fonction Orchestration pour gérer la mise en œuvre totale des instances d'IA conçues par la fonction STUDIO et industrialisée par la fonction Forge et effectuer la gestion permanente sur une infrastructure hybride de nuage.*

*Avantageusement, les applications d'IA sont rendues indépendantes des infrastructures de support par l'orchestration supportée par TOSCA* qui permet de construire des applications nativement transportables à travers les infrastructures.*

*Selon une variante de l'invention, la fonction STUDIO comprend un libre service de développement d'applications cognitives comprenant un libre service prescriptif et d'apprentissage machine et une interface utilisateur d'apprentissage en profondeur.*
*Dans une variante de l'invention, la fonction STUDIO fournit deux fonctions :*
*une première, de portail donnant accès au catalogue de composants, permettant l'assemblage de composants en applications, (au standard TOSCA) et de gérer leur déploiement sur des infrastructures variées ;*
*une seconde, d'IHM, et d'interface d'utilisateur du moteur (engine) FastML fournissant une interface graphique donnant accès aux fonctions de développement de modèles MUDL du moteur FastML.*

*Selon une autre variante, le portail de la fonction STUDIO (au standard TOSCA) offre une boîte à outil pour la gestion, la conception, l'exécution et la génération d'applications et des données de test et comporte :*
*une interface permettant à l'utilisateur de définir chaque application au standard TOSCA à partir des composants du catalogue qui sont réunis par une action glisser-déposer dans un conteneur (DockerContainer) et pour leur identification, l'utilisateur leur associe, par cette interface, des valeurs et des actions notamment des volumes correspondant aux données en entrée et sortie (DockerVolume);*
*un menu gestion permet de gérer le déploiement d'au moins une application (au standard TOSCA) sur des infrastructures variées en proposant les différentes infrastructures (Nuage, cloud, Nuage hybride, cloud hybrid, HPC, etc...) proposées par le système sous forme d'objet graphique et en réunissant l'infrastructure sur laquelle l'application sera exécutée par une action glisser-déposer dans un objet «compute» définissant le type de calculateur.*
*Selon une autre variante, la fonction Forge comprend des modèles pré-entrainés mémorisés dans le système et accessibles à l'utilisateur par une interface de sélection, pour permettre l'apprentissage de transfert, des cas d'usage pour le développement rapide de bout en bout, des composants technologiques ainsi que pour instaurer les environnements spécifiques des utilisateurs et les cas d'usages.*

*Dans une variante de l'invention, la fonction Forge comprend un module de programme qui exécuté sur un serveur permet de créer un espace de travail privé commun à une entreprise ou un groupe d'utilisateurs accrédités pour stocker, partager, retrouver et mettre à jour de façon sécurisée (par exemple après authentification des utilisateurs et vérification des droits d'accès(credentials)), des plans de composants, des cadres d'apprentissages en profondeur (Deep Learning Frameworks), des jeux de données et des modèles entrainés et constituant un entrepôt pour les composants analytiques, les modèles et les jeux de données.*

*Selon une autre variante, la fonction Forge comprend un module de programme et une interface IHM permettant de gérer un catalogue de datasets, ainsi qu'un catalogue de modèles et un catalogue de frameworks (Fmks) disponibles pour le service, apportant ainsi une facilité supplémentaire au Data Scientist.*

*Selon une autre variante, la fonction Forge propose un catalogue donnant accès à des composants :*
*De type Machine Learning, comme les frameworks ML (e.g. Tensorflow*), mais aussi les modèles et les datasets*
*De type Big Data Analytics (e.g. la suite Elastic*, les distribution Hadoop*...) pour les datasets.*

*Selon une autre variante, la fonction Forge est un catalogue donnant accès à des composants constituant des Outils de développement (Jupyter*, R*, Python*...).*

*Selon une autre variante, la fonction Forge est un catalogue donnant accès aussi à des (blueprints) schémas directeur d'application (templates).*

*Dans une autre variante de l'invention le principe de fonctionnement de la fonction orchestration réalisée par un module de programme d'un orchestrateur, de préférence Yorc (en majeur partie une open source connue de l'homme du métier), recevant une application TOSCA* telle que décrite ci-dessus (appelée aussi topologie), est d'allouer les ressources physiques correspondant au composant Compute (en fonction des configurations cela peut être une machine virtuelle, un nœud physique...), puis il va installer sur cette ressource les logiciels spécifiés dans l'application TOSCA pour ce Compute, ici un conteneur Docker, et dans notre cas monter les volumes spécifiés pour ce Compute.*

*Selon une autre variante, le déploiement d'une telle application (au standard TOSCA) par l'orchestrateur Yorc, s'effectue en utilisant le plugin Slurm de l'orchestrateur qui va déclencher la planification d'une tâche slurm (scheduling d'un job slurm) sur une grappe (cluster) de calculateur haute performance (HPC).*

*Selon une autre variante l'orchestrateur Yorc surveille les ressources disponibles du super calculateur ou du nuage et, lorsque les ressources requises seront disponibles, un nœud du supercalculateur ou du nuage sera alloué (correspondant au Compute TOSCA), le conteneur (DockerContainer) sera installé dans ce supercalculateur ou sur ce nœud et les volumes correspondant aux données en entrée et sortie (DockerVolume) seront montés, puis l'exécution du conteneur effectuée.*

*Dans une autre variante la fonction Orchestration (orchestrator) propose à l'utilisateur des connecteurs pour gérer les applications sur différentes infrastructures soit en Infrastructure en tant que Service (Infrastructur as a Service laaS) (telles que par exemple, AWS*, GCP*, Openstack*,* ...) *soit en Contenu en tant que Service (Content as a Service CaaS) (telles que par exemple, Kubernetes for now*), soit en Calcul Haute Performance HPC (telles que par exemple, Slurm*, PBS* planned).*

*Selon une autre variante de l'invention le système comporte en plus un moteur d'apprentissage machine rapide FMLE (FastML Engine) pour faciliter l'utilisation des puissances de calcul et les possibilités des grappes de calculateurs hautes performances en tant que support d'exécution des modèles d'entrainement d'apprentissage machine et spécialement des modèles d'entrainement d'apprentissage profond.*

*L'invention concerne en outre l'utilisation du système selon l'une des particularités décrites ci-dessus pour la constitution de cas d'usage, qui permettront notamment d'enrichir la collection de « blueprints » et de composants de Forge (catalogue) : Les premiers cas d'usage identifiés étant*
*la cyber sécurité, avec l'utilisation de l'IA pour les Prescriptive SOC ;*
*le Cognitive Data Center (CDC)*
*la vision par ordinateur, avec des applications de vidéo surveillance*

*D'autres particularités et avantages de la présente invention sont détaillés dans la description qui suit*

### PRESENTATION DES FIGURES

*D'autres particularités et avantages de la présente invention apparaîtront plus clairement à la lecture de la description ci-après, faite en référence aux dessins annexés, dans lesquels :*
*La [**Fig. 1**] est une représentation schématique de l'architecture d'ensemble du système utilisant une suite d'outils modulaires selon un mode de réalisation ;*
*La [**Fig. 2**] est une représentation schématique détaillée, montrant le travail d'un utilisateur (par exemple le Data scientist) développant, mettant au point, et déployant un modèle et les différentes interactions entre les modules.*

### DESCRIPTION DES MODES DE REALISATION PREFERES DE L'INVENTION

*Les figures exposent l'invention de manière détaillée pour permettre sa mise en œuvre. De nombreuses combinaisons peuvent être envisagées sans s'écarter de la portée de l'invention. Les modes de réalisation décrits s'attachent plus particulièrement à un exemple de mise en œuvre de l'invention dans le contexte d'un système (utilisant une suite d'outils modulaires et clairement structurée exécutable sur des plates formes informatique distribuées) et d'une utilisation dudit système pour simplifier, améliorer et optimiser la création et l'utilisation d'application d'intelligence artificielle. Cependant, toute mise en œuvre dans un contexte différent, en particulier pour tout type d'application d'intelligence artificielle, est également visée par la présente invention. La suite d'outils modulaires et clairement structurée exécutable sur des plates formes informatique distribuées comporte :*

*La* *figure 1* *illustre un système utilisant une suite d'outils d'aide à la conception d'application d'Intelligence Artificielle, (SOACAIA) modulaires et clairement structurés, exécutables sur des plateformes informatiques distribuées (cloud, cluster) ou non (HPC) pour parcourir développer, rendre disponible et gérer des applications d'IA, ce jeu d'outils implémentant trois fonctions réparties dans trois espaces fonctionnels*

*Une fonction Studio (1) qui permet d'établir un espace de travail (22) partagé sécurisé et privé pour l'entreprise dans lequel l'équipe étendue des analystes commerciaux, des scientifiques de données, des architectes d'application et des gestionnaires IT accrédités sur le système par l'entreprise peuvent communiquer et travailler ensembles en collaboration*.

*Dans une variante, la fonction Studio (1) permet de converger les exigences et besoins de différentes équipes autour par exemple d'un projet, améliorant ainsi l'efficacité de ces équipes et accélère le développement dudit projet.*

*Dans une variante, les utilisateurs ont à disposition des librairies de composants qu'ils peuvent enrichir, pour les échanger avec d'autres utilisateurs de l'espace de travail et s'en servir pour accélérer les tests des prototypes, valider plus rapidement les modèles et le concept.*

*En outre, dans une autre variante la fonction Studio (1) permet d'explorer, de développer rapidement et déployer facilement sur plusieurs plateformes informatiques distribuées ou non. Une autre fonctionnalité de Studio est d'accélérer les entrainements des modèles en automatisant l'exécution des jobs. La qualité du travail est améliorée et facilitée.*

*Selon une variante, la fonction STUDIO (1) comprend un libre service de développement d'application cognitive (11). Ledit libre service de développement d'application cognitive comprend un libre service prescriptif, d'apprentissage machine (12) et une interface utilisateur d'apprentissage en profondeur (13).*

*Une variante de la fonction STUDIO (1) fournit une première fonction de portail qui donne accès au catalogue de composants, pour permettre l'assemblage de composants en applications (au standard *TOSCA) et gère leur déploiement sur des infrastructures variées.*

*Le standard TOSCA (Topologie et spécification d'orchestration pour les applications cloud) est un langage standard pour décrire une topologie (ou structure) de services (par exemple, et de manière non limitative, des services Web,) en nuage (cloud), leurs composants, leurs relations et les processus qui les gèrent. Le standard TOSCA comprend des spécifications décrivant les processus de création ou de modification de services (par exemple les services Web).*

*Ensuite, dans une autre variante une seconde fonction d'IHM (Interface Homme Machine), du moteur (engine) FastML fournit une interface graphique donnant accès aux fonctions de développement de modèles d'apprentissage automatique (Machine Learning (ML))*/*approfondie (Deep Learning (DL)) du moteur FastML.*

*Une variante de la fonction STUDIO (1) (au standard TOSCA) offre une boîte à outil pour la gestion, la conception, l'exécution et la génération d'applications et de données de test et comporte :*
- *une interface permettant à l'utilisateur de définir chaque application au standard TOSCA à partir des composants du catalogue qui sont réunis par une action glisser-déposer dans un conteneur (DockerContainer) et pour leur identification, l'utilisateur leur associe, par cette interface, des valeurs et des actions notamment des volumes correspondant aux données en entrée et sortie (DockerVolume);*
- *un menu gestion permet de gérer le déploiement d'au moins une application (au standard TOSCA) sur des infrastructures variées en proposant les différentes infrastructures (Nuage, cloud, Nuage hybride, cloud hybrid, HPC, etc...) proposées par le système sous forme d'objet graphique et en réunissant l'infrastructure sur laquelle l'application sera exécutée par une action glisser-déposer dans un objet « compute » définissant le type de calculateur.*

*Une variante de la fonction STUDIO (1) est de dédier un moteur d'apprentissage profond exécutant de façon itérative l'entrainement et le calcul intensif requis et ainsi préparer l'application* à *son utilisation réelle.*

*Construite sur les principes de réutilisation des meilleures pratiques, la fonction Forge (2) est un espace de travail hautement collaboratif, permettant aux équipes d'utilisateurs spécialistes de travailler ensemble de manière optimale.*

*Dans une variante, la fonction Forge (2) fournit un accès structuré à un référentiel croissant de composants analytiques, et met à disposition des équipes d'utilisateurs accrédités les modèles d'analyse et leurs jeux de données associés. Ceci encourage la réutilisation et l'adaptation des données pour une productivité maximale et permet d'accélérer la production tout en minimisant les coûts et les risques.*

*Selon une variante, la fonction Forge (2) est une zone de stockage, un entrepôt pour les composants analytiques, les modèles et les datasets.*

*Dans une autre variante cette fonction Forge joue aussi le rôle de catalogue donnant accès à des composants constituant des Outils de développement (Jupyter*, R*, Python*...), ou de catalogue donnant accès aussi à des (blueprints) schémas directeur d'application (templates).*

*Dans une variante, la fonction Forge (2) comprend également des modèles pré-entrainés mémorisés dans le système et accessibles à l'utilisateur par une interface de sélection, pour permettre l'apprentissage de transfert, des cas d'usage pour le développement rapide de bout en bout, des composants technologiques ainsi que pour instaurer les environnements spécifiques des utilisateurs et les cas d'usages.*

*Dans une variante supplémentaire la fonction Forge (2) comprend un module de programme qui exécuté sur un serveur ou une machine permet de créer un espace de travail privé commun à une entreprise ou un groupe d'utilisateurs accrédités pour stocker, partager, récupérer et mettre à jour de façon sécurisée (par exemple après authentification des utilisateurs et vérification des droits d'accès (credentials)), des plans de composants, des cadres d'apprentissages en profondeur (Deep Learning Frameworks), des jeux de données (datasets) et des modèles entrainés et constituant un entrepôt pour les composants analytiques, les modèles et les jeux de données.*

*Dans une autre variante, la fonction Forge permet à tous les membres d'une équipe projet de collaborer sur le développement d'une application. Cela améliore la qualité et la rapidité de développement des nouvelles applications en ligne avec les attentes des métiers.*

*Une variante de la fonction Forge (2) comprend en plus un module de programme et une interface IHM permettant de gérer un catalogue de datasets, ainsi qu'un catalogue de modèles et un catalogue de frameworks (Fmks) disponibles pour le service, apportant ainsi une facilité supplémentaire aux utilisateurs de préférence au Data Scientist.*

*Dans une autre variante, la fonction Forge met à disposition un nouveau modèle dérivé d'un modèle précédemment qualifié.*

*Dans une autre variante, la fonction Forge met à disposition des utilisateurs accrédités un catalogue donnant accès à des composants :*
*De type Machine Learning, comme les frameworks ML (e.g. Tensorflow*), mais aussi les modèles et les datasets ; ou*
*De type Big Data Analytics (e.g. la suite Elastic*, les distribution Hadoop*...) pour les datasets.*

*Enfin dans une variante, la fonction Forge (2) comprend un algorithme qui permet d'industrialiser les instances d'IA et rend les modèles analytiques et leur jeu de données associées disponibles aux équipes et utilisateurs accrédités.*

*L'utilisation de la fonction Orchestration (3) qui, gère la mise en œuvre totale des instances d'IA conçues par utilisation de la fonction STUDIO et industrialisée par la fonction Forge, effectue la gestion permanente sur une infrastructure hybride de nuage transforme le domaine d'application d'IA avec efficacité.*

*Selon une variante, le principe de fonctionnement de la fonction orchestration réalisée par un module de programme Yorc recevant une application TOSCA* (appelée aussi topologie), est :*
- *l'allocation des ressources physiques du Cloud ou d'un HPC correspondant au composant Compute (en fonction des configurations cela peut être une machine virtuelle, un nœud physique...),*
- *avec l'installation sur cette ressource des logiciels spécifiés dans l'application TOSCA pour ce Compute, ici un conteneur Docker, et dans notre cas monter les volumes spécifiés pour ce Compute.*

*Dans une variante, le déploiement d'une telle application (au standard TOSCA) par l'orchestrateur Yorc, s'effectue en utilisant le plugin Slurm de l'orchestrateur qui déclenche la planification d'une tâche slurm (scheduling d'un job slurm) sur une grappe (cluster) de calculateur haute performance (HPC).*

*Selon une variante, l'orchestrateur Yorc surveille les ressources disponibles du super calculateur ou du nuage et, lorsque les ressources requises sont disponibles, un nœud du supercalculateur ou du nuage est alloué (correspondant au Compute TOSCA), le conteneur (DockerContainer) est installé dans ce supercalculateur ou sur ce nœud et les volumes correspondant aux données en entrée et sortie (DockerVolume) sont montés, puis l'exécution du conteneur effectuée.*

*Dans une autre variante, la fonction Orchestration (orchestrator) propose à l'utilisateur des connecteurs pour gérer les applications sur différentes infrastructures soit en Infrastructure en tant que Service (Infrastructure as a Service laaS) (telles que par exemple, AWS*, GCP*, Openstack*,* ...) *soit en Contenu en tant que Service (Content as a Service CaaS) (telles que par exemple, Kubernetes for now*), soit en Calcul Haute Performance HPC (telles que par exemple, Slurm*, PBS* planned).*

*Dans certains modes de réalisation le système décrit précédemment comporte en plus un moteur d'apprentissage machine rapide FMLE (FastML Engine) pour faciliter l'utilisation des puissances de calcul et les possibilités des grappes de calculateurs hautes performances en tant que support d'exécution d'un modèle d'entrainement d'apprentissage machine et spécialement d'un modèle d'entrainement d'apprentissage profond.*

*La* *figure (2**) représente schématiquement un exemple d'utilisation du système par un data scientist. Dans cet exemple l'utilisateur accède à son espace privé sécurisé en échangeant par l'intermédiaire de l'interface 14 de Studio, ses informations d'accréditation, puis sélectionne au moins un modèle (21), au moins un frameworks (22), au moins un dataset 24 et éventuellement un modèle entraîné (23).*

*Selon une variante d'utilisation pour constituer des cas d'usage, permettant notamment d'enrichir la collection de « blueprints » et de composants de Forge (catalogue) dans les domaines de la cyber sécurité, où la détection en amont de toutes les phases qui précèdent une attaque ciblée est un problème crucial La disponibilité, les quantités importantes de données (Big data) permettent aujourd'hui d'envisager une approche préventive de la détection des attaques. L'utilisation de l'IA pour les Prescriptives SOC (centre opérationnel de sécurité) apporte des solutions. Avec une collecte et un traitement de de données issues de différentes sources (externes et internes) on alimente une base. Le Machine Learning et les procédés de visualisation de données permettent ensuite de réaliser de l'analyse comportementale et en déduire du prédictif dans les SOC. Cette possibilité de pouvoir anticiper les attaques qu'offre l'utilisation de la suite d'outils de la* *figure (1**) est beaucoup mieux adapté à la cyber sécurité actuelle. avec l'utilisation de l'IA pour les Prescriptives SOC.*

*Selon un autre variante d'utilisation pour constituer des cas d'usage, permettant notamment d'enrichir la collection de « blueprints » et de composants de Forge (catalogue) dans le domaine du CDC qui est un centre de données intelligent et autonome capable de recevoir et analyser des données du réseau, des serveurs, des applications, des systèmes de refroidissement et de consommation d'énergie, l'utilisation du système* *figure (1**) permet une analyse en temps réel de tous les évènements, fournit des graphes d'interprétation avec des prédictions utilisant un indicateur de confiance concernant les possibles pannes et les éléments qui seront potentiellement impactés. Ainsi, permet d'optimiser la disponibilité et la performance des applications et des infrastructures.*

*Selon une autre variante d'utilisation pour constituer des cas d'usage, permettant notamment d'enrichir la collection de « blueprints » et de composants de Forge (catalogue) dans les domaines de la vision par ordinateur et vidéo surveillance le système de la* *figure (1**) met à disposition toutes dernières technologies d'analyse d'images et fournit une application de vidéo intelligence capable d'extraire des caractéristiques des visages, véhicules, sacs et autres objets et fournit de puissants services de reconnaissance de visages, de suivi de mouvements de foules, de recherche de personnes à partir de caractéristiques donnés, de reconnaissance de plaques d'immatriculation entre autres.*
*Enfin le déploiement du modèle sur un serveur ou une machine est effectué par l'orchestrateur (3) qui gère également l'entrainement.*
*Dans une dernière étape la sauvegarde du modèle entraîné est effectuée dans Forge (2) et vient enrichir le catalogue de modèles entraînés (23).*

*La présente demande décrit diverses caractéristiques techniques et avantages en référence aux figures et*/*ou à divers modes de réalisation. L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles ou que la combinaison ne fournisse pas une solution à au moins un des problèmes techniques mentionnés dans la présente demande. De plus, les caractéristiques techniques décrites dans un mode de réalisation donné peuvent être isolées des autres caractéristiques de ce mode à moins que l'inverse ne soit explicitement mentionné.*
*Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.*

## Revendications

1. *Système utilisant une suite d'outils d'aide à la conception d'application d'Intelligence Artificielle, (SOACAIA) modulaires et clairement structurés, exécutables sur des plateformes informatiques pour parcourir développer, rendre disponible et gérer des applications d'IA, ce jeu d'outils implémentant trois fonctions :*
- *Une fonction Studio (1) permettant d'établir un espace partagé sécurisé et privé pour l'entreprise dans lequel l'équipe étendue des analystes commerciaux, des scientifiques de données, des architectes d'application et des gestionnaires IT peuvent communiquer et travailler ensembles en collaboration ;*
- *Une fonction Forge (2) permettant d'industrialiser les instances d'IA et de rendre les modèles analytiques et leur jeu de données associées disponibles aux équipes de développement sous réserve du respect des conditions de sécurité et de conformité de traitement ;*
- *Une fonction Orchestration (3) pour gérer la mise en œuvre totale des instances d'IA conçues par la fonction STUDIO et industrialisée par la fonction Forge et effectuer la gestion permanente sur une infrastructure hybride de nuage ou HPC.*

2. *Système utilisant une suite (SOACAIA) d'outils modulaires et clairement structurés, exécutables sur des plateformes informatiques **caractérisé en ce que** les applications d'IA sont rendues indépendantes des infrastructures de support par l'orchestration supportée par TOSCA qui permet de construire des applications nativement transportable à travers les infrastructures*

3. *Système utilisant une suite (SOACAIA) d'outils modulaires et clairement structurés, exécutables selon la revendication 1 ou 2 **caractérisé en ce que** la fonction STUDIO comprend un libre service de développement d'applications cognitives comprenant un libre service prescriptif et d'apprentissage machine et une interface utilisateur d'apprentissage en profondeur.*

4. *Système utilisant une suite (SOACAIA) d'outils, modulaires et clairement structurés, exécutables selon la revendication 3 **caractérisé en ce que** la fonction STUDIO fournit deux fonctions :*
*une première, de portail donnant accès au catalogue de composants, permettant l'assemblage de composants en applications, (au standard TOSCA) et de gérer leur déploiement sur des infrastructures variées ;*
*une seconde, d'IHM, et d'interface d'utilisateur du moteur (engine) FastML fournissant une interface graphique donnant accès aux fonctions de développement de modèles MUDL du moteur FastML.*

5. *Système utilisant une suite (SOACAIA) d'outils, modulaires et clairement structurés, exécutables selon la revendication 3 **caractérisé en ce que** le portail de la fonction STUDIO (au standard TOSCA) offre une boîte à outil pour la gestion, la conception, l'exécution et la génération d'applications et de données de test et comporte :*
- *une interface permettant à l'utilisateur de définir chaque application au standard TOSCA à partir des composants du catalogue qui sont réunis par une action glisser-déposer dans un conteneur (DockerContainer) et pour leur identification, l'utilisateur leur associe, par cette interface, des valeurs et des actions notamment des volumes correspondant aux données en entrée et sortie (DockerVolume);*
- *un menu gestion permet de gérer le déploiement d'au moins une application (au standard TOSCA) sur des infrastructures variées en proposant les différentes infrastructures (Nuage, cloud, Nuage hybride, cloud hybrid, HPC, etc...) proposées par le système sous forme d'objet graphique et en réunissant l'infrastructure sur laquelle l'application sera exécutée par une action glisser-déposer dans un objet « compute » définissant le type de calculateur.*

6. *Système utilisant une suite (SOACAIA) d'outils, modulaires et clairement structurés, exécutables selon une des revendications 1 à 5 **caractérisé en ce que** la fonction Forge comprend des modèles pré-entrainés mémorisés dans le système et accessibles à l'utilisateur par une interface de sélection, pour permettre l'apprentissage de transfert, des cas d'usage pour le développement rapide de bout en bout, des composants technologiques ainsi que pour instaurer les environnements spécifiques des utilisateurs et les cas d'usages.*

7. *Système utilisant une suite (SOACAIA) d'outils, modulaires et clairement structurés, exécutables selon la revendication 1 à 6 **caractérisé en ce que** la fonction Forge comprend un module de programme qui exécuté sur un serveur permet de créer un espace de travail privé commun à une entreprise ou un groupe d'utilisateurs accrédités pour stocker, partager, retrouver et mettre à jour de façon sécurisée (par exemple après authentification des utilisateurs et vérification des droits d'accès(credentials)), des plans de composants, des cadres d'apprentissages en profondeur (Deep Learning Frameworks), des jeux de données et des modèles entrainés et constituant un entrepôt pour les composants analytiques, les modèles et les jeux de données.*

8. *Système utilisant une suite (SOACAIA) d'outils, modulaires et clairement structurés, exécutables selon une des revendications* 1 *ou* 6 *ou 7 **caractérisé en ce que** la fonction Forge comprend un module de programme et une interface IHM permettant de gérer un catalogue de datasets, ainsi qu'un catalogue de modèles et un catalogue de frameworks (Fmks) disponibles pour le service, apportant ainsi une facilité supplémentaire au Data Scientist.*

9. *Système utilisant une suite (SOACAIA) d'outils, modulaires et clairement structurés, exécutables selon une des revendications* 1 *ou* 6 *ou 7 ou 8 **caractérisé en ce que** la fonction Forge propose un catalogue donnant accès à des composants :*
*a De type Machine Learning, comme les frameworks ML (e.g. Tensorflow*), mais aussi les modèles et les datasets*
*De type Big Data Analytics (e.g. la suite Elastic*, les distribution Hadoop*...) pour les datasets.*

10. *Système utilisant une suite (SOACAIA) d'outils, modulaires et clairement structurés, exécutables selon une des revendications* 1 *ou* 6 à 9 ***caractérisé en ce que** la fonction Forge est un catalogue donnant accès à des composants constituant des Outils de développement (Jupyter*, R*, Python*...).*

11. *Système utilisant une suite (SOACAIA) d'outils, modulaires et clairement structurés, exécutables selon une des revendications* 1 *ou* 6 *à 11 **caractérisé en ce que** la fonction Forge est un catalogue donnant accès aussi à des (blueprints) schémas directeur d'application (templates).*

12. *Système utilisant une suite (SOACAIA) d'outils, modulaires et clairement structurés, exécutables selon une des revendication 1 à 8 **caractérisé en ce que** le principe de fonctionnement de la fonction orchestration réalisée par un module de programme Yorc recevant une application TOSCA* telle que décrite ci-dessus (appelée aussi topologie), est d'allouer les ressources physiques correspondant au composant Compute (en fonction des configurations cela peut être une machine virtuelle, un nœud physique...), puis il va installer sur cette ressource les logiciels spécifiés dans l'application TOSCA pour ce Compute, ici un conteneur Docker, et dans notre cas monter les volumes spécifiés pour ce Compute.*

13. *Système utilisant une suite (SOACAIA) d'outils, modulaires et clairement structurés, exécutables selon une des revendication 1 à 12 **caractérisé en ce que** le déploiement d'une telle application (au standard TOSCA) par l'orchestrateur Yorc, s'effectue en utilisant le plugin Slurm de l'orchestrateur qui va déclencher la planification d'une tâche slurm (scheduling d'un job slurm) sur une grappe (cluster) de calculateur haute performance (HPC).*

14. *Système utilisant une suite (SOACAIA) d'outils, modulaires et clairement structurés, exécutables selon une des revendication 1 à 13 **caractérisé en ce que** l'orchestrateur Yorc surveille les ressources disponibles du super calculateur ou du nuage et, lorsque les ressources requises seront disponibles, un nœud du supercalculateur ou du nuage sera alloué (correspondant au Compute TOSCA), le conteneur(DockerContainer) sera installé dans ce supercalculateur ou sur ce nœud et les volumes correspondant aux données en entrée et sortie (DockerVolume) seront montés, puis l'exécution du conteneur effectuée.*

15. *Système utilisant une suite (SOACAIA) d'outils, modulaires et clairement structurés, exécutables selon une des revendications 1 à 14 **caractérisé en ce que** la fonction Orchestration (orchestrator) propose à l'utilisateur des connecteurs pour gérer les applications sur différentes infrastructures soit en Infrastructure en tant que Service (Infrastructur as a Service laaS) (telles que par exemple ,AWS*, GCP*, Openstack*,...) soit en Contenu en tant que Service (Content as a Service CaaS) (telles que par exemple, Kubernetes for now*), soit en Calcul Haute Performance HPC (telles que par exemple, Slurm*, PBS* planned).*

16. *Système utilisant une suite (SOACAIA) d'outils, modulaires et clairement structurés, exécutables selon une des revendications 1 à 12 **caractérisé en ce qu'**il comporte en plus un moteur d'apprentissage machine rapide FMLE (FastML Engine) pour faciliter l'utilisation des puissances de calcul et les possibilités des grappes de calculateurs hautes performances en tant que support d'exécution d'un modèle d'entrainement d'apprentissage machine et spécialement d'un modèle d'entrainement d'apprentissage profond.*

17. *Utilisation du Système utilisant une suite (SOACAIA) d'outils, modulaires et clairement structurés, exécutables selon une des revendications* 1 *à 16 pour la constitution de cas d'usage, qui permettront notamment d'enrichir la collection de « blueprints » et de composants de Forge (catalogue) : Les premiers cas d'usages identifiés étant :*
*la cyber sécurité, avec l'utilisation de l'IA pour les Prescriptive SOC ;*
*le Cognitive Data Center (CDC)*
*la vision par ordinateur, avec des applications de vidéo surveillance*
